# EUROPÄISCHE PATENTSCHRIFT

(11) **EP 2 305 039 B1**
(45) Veröffentlichungstag und Bekanntmachung des Hinweises auf die Patenterteilung: **14.06.2017**
(21) Anmeldenummer: 10176039.5
(22) Anmeldetag: 09.09.2010
(51) Int. Cl.: A21C 5/00

(54) **Verfahren und Vorrichtung zur Portionierung einer Mehrzahl von Teigsträngen in einzelne Teigportionen**
Method and device for portioning a plurality of dough strands into individual dough portions
Procédé et dispositif de mise en portions d'une multitude de tronçons de pâte dans des portions de pâte individuelles

(30) Priorität: 01.10.2009 DE 102009043668
(43) Veröffentlichungstag der Anmeldung: 06.04.2011
(73) Patentinhaber: Werner & Pfleiderer Industrielle Backtechnik GmbH, 71732 Tamm (DE)
(72) Erfinder: Mülders, Herbert, 52222 Stolberg (DE); Knost, Dieter, 91550 Dinkelsbühl (DE)
(74) Vertreter: Rau, Schneck & Hübner Patentanwälte Rechtsanwälte PartGmbB

(56) Entgegenhaltungen:
- EP-A1- 1 174 032
- EP-A2- 0 219 420
- WO-A1-2006/030454
- CH-A- 377 755
- DE-A1- 10 136 980
- DE-A1- 19 720 932

## Beschreibung

Die Erfindung betrifft ein Verfahren und eine Vorrichtung zur Portionierung einer Mehrzahl von Teigsträngen in einzelne Teigportionen.

Ein Teigstrang-Portionierverfahren für einen einzelnen Teigstrang und eine diese bewerkstelligende Vorrichtung mit einer Fördereinrichtung und einer Schneideinrichtung, bei dem das Volumen und/oder die Dichte des Teigstranges zur Steuerung der Schneideinrichtung bestimmt wird, sind aus der WO 2006/030 454 A1 und DE 197 20 932 A1 bekannt.

Es ist eine Aufgabe der vorliegenden Erfindung, ein Verfahren und eine Vorrichtung zur Portionierung einer Mehrzahl von Teigsträngen in einzelne Teigportionen derart weiterzubilden, dass die Portioniergenauigkeit verbessert ist.

Diese Aufgabe ist erfindungsgemäß gelöst durch ein Verfahren mit den im Anspruch 1 und durch eine Vorrichtung mit den im Anspruch 9 angegebenen Merkmalen.

Erfindungsgemäß wurde erkannt, dass über die Volumenmessung der Teigstränge eine genaue Portionsvorgabe möglich ist. Dies führt zu einer vorteilhaften Verringerung von Portioniertoleranzen, sodass eine SicherheitsVolumen- oder Gewichtszugabe, die bei den bekannten Portionierverfahren üblich war, reduziert oder ganz vermieden sein kann. Aufgrund der reproduzierbaren Portionierung, die beispielsweise mit einer Genauigkeit von ±2 % oder ±1 % geschehen kann, ergibt sich auch ein gleichbleibendes späteres Backergebnis. Es kann parallel eine Mehrzahl von Teigsträngen verarbeitet werden, beispielsweise zwei, drei, vier, fünf, sechs, acht, zehn oder noch mehr Teigstränge. Diese Teigstränge können hinsichtlich ihres Volumens individuell vermessen werden, sodass jeder der Teigstränge entsprechend individuell portioniert werden kann. Eine strangindividuelle Teigoptimierung kann über eine als der Fördereinrichtung nacheilende Schneideeinrichtung erfolgen. Eine Bewegungsbahn der Schneideinrichtung während des Portionierverfahrens kann über eine entsprechende Steuerung und über eine entsprechende Steuerungssoftware wegoptimiert zwischen den Förderbahnen für die Teigstränge vorgegeben werden. Aus der Volumenmessung ergibt sich mit hoher Genauigkeit eine für die Portionierung in der Regel ausreichend präzise Gewichtsbestimmung, da in der Regel mit guter Näherung von einer konstanten Dichte der Teigstränge ausgegangen werden kann. Damit wird bei der erfindungsgemäßen Teigstrangmessung mit dem Volumen gerade diejenige Größe vermessen, die für Gewichts- bzw. Portionsschwankungen verantwortlich ist, nämlich das Volumen. Es wird nicht, wie dies oftmals bei Portionsmessungen geschieht, die auf Dichtemessungen basieren, eine Querschnittskonstantheit des Teigstrangs vorausgesetzt.

Bei einem Verfahren mit zusätzlicher Dichtemessung nach Anspruch 2 können exakte Gewichtsportionen realisiert werden. Die Dichtemessung kann durch eine Ultraschallmessung geschehen. Alternativ kann eine Dichtemessung auch durch eine elektrische Leitwertmessung und/oder durch eine kapazitive Sensorik zur Vermessung des Teigstrangs erfolgen.

Eine optische Volumenmessung nach Anspruch 3 kann sehr genau erfolgen. Hierbei kann eine optische 3D-Scanmessung, eine Lichtschnittmessung, oder eine sonstige aus der optischen Bildverarbeitung bekannte bildgebende Messtechnik zum Einsatz kommen. Bei dieser optischen Volumenmessung kommen optische Wellenlängen, also Wellenlängen im sichtbaren Bereich (380 nm bis 780 nm) zum Einsatz.

Eine Verlagerung der abgeschnittenen Teigportion durch die Schneideinrichtung nach Anspruch 4 ermöglicht eine für die nachfolgende Verarbeitung vorteilhafte Trennung der Teigportionen in der Förderrichtung.

Ein Nachregeln einer Teigstrangbreite nach Anspruch 5 vergrößert den Durchsatz des Portionierverfahrens, da auf diesem Wege die Betriebsweise der Schneideinrichtung optimiert werden kann. Auch die Genauigkeit der Portionierung kann, beispielsweise beim Schneiden aller Teigstränge mit ein und derselben Schneideinrichtung, durch das Nachregeln der Teigstrangbreite verbessert werden.

Die Vorteile einer Portioniervorrichtung nach den Ansprüchen 6 bis 9 entsprechen denen, die vorstehend unter Bezugnahme auf das erfindungsgemäße Portionierverfahren bereits erläutert wurden. Bei der Portioniervorrichtung kann genau eine Schneideinrichtung zum Einsatz kommen. Es können auch zwei oder mehr Schneideinrichtungen eingesetzt sein.

Ein Ausführungsbeispiel der Erfindung wird nachfolgend anhand der Zeichnung näher erläutert. In dieser zeigen:
- Fig. 1: schematisch in einer Aufsicht Hauptkomponenten einer Vorrichtung zur Portionierung von insgesamt fünf Teigsträngen in einzelne Teigportionen, wobei ein Förderband einer Fördereinrichtung lediglich ausschnittsweise gezeigt ist;
- Fig. 2: schematisch die optischen Hauptkomponenten einer Messeinrichtung der Portioniervorrichtung zum Messen des Volumens der Teigstränge, wobei lediglich einer von zwei Sensoren dargestellt ist;
- Fig. 3: schematisch die Positionsverhältnisse bei der Vermessung der fünf im Querschnitt dargestellten Teigstränge wiederum mit einem dargestellten Sensor;
- Fig. 4: eine Seitenansicht einer Schneideinrichtung der Portioniervorrichtung zum Schneiden der Teigstränge; und
- Fig. 5: eine Aufsicht gemäß Blickrichtung V in Fig. 4.

Eine Portioniervorrichtung 1 dient zum Portionieren einer Mehrzahl von Teigsträngen 2, im dargestellten Ausführungsbeispiel von fünf Teigsträngen 2, in einzelne Teigportionen 3.

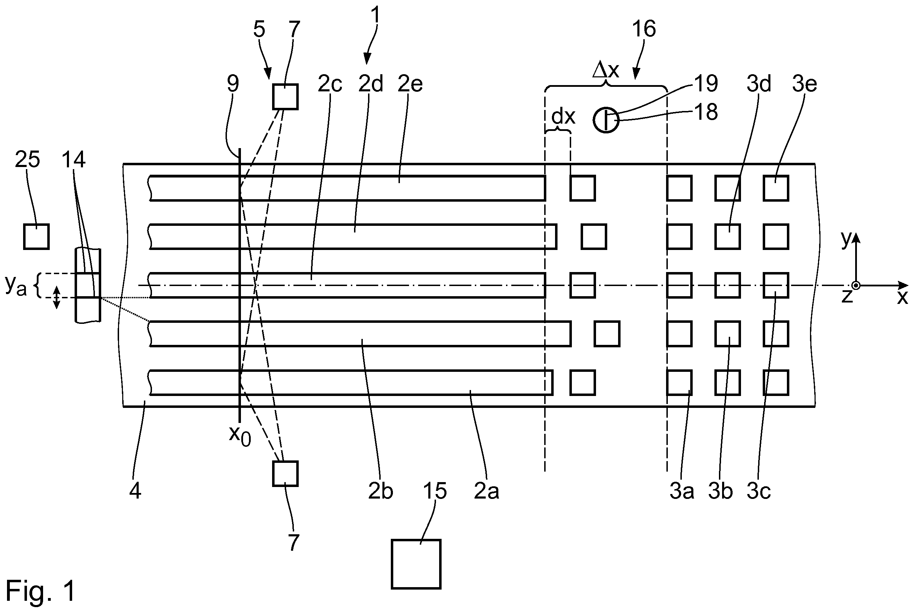

Zur Erleichterung der Erläuterung von Lagebeziehungen ist in der Zeichnung ein kartesisches xyz-Koordinatensystem eingefügt. Die x-Richtung verläuft in der Fig. 1 nach rechts und parallel zur Förderrichtung einer Fördereinrichtung der Portioniervorrichtung 1, von der in der Fig. 1 lediglich ein Abschnitt eines Förderbandes 4 dargestellt ist. Die y-Richtung verläuft in der Fig. 1 nach oben, wobei ein die Teigstränge 2 und die Teigportionen 3 tragendes Obertrum des Förderbandes 4 eine Förderebene hat, die von der xy-Ebene aufgespannt ist. Die z-Richtung des Koordinatensystems verläuft in der Fig. 1 senkrecht zur Zeichenebene auf den Betrachter zu. Die Teigstränge 2 sind in der Fig. 1 von unten nach oben mit Kleinbuchstaben von 2a bis 2e versehen. Entsprechendes gilt für eine Buchstabenzuordnung bei den Teigportionen 3.
Eine Fördergeschwindigkeit des Förderbandes 4 liegt im Bereich von 5 m/min bis 10 m/min und beträgt insbesondere 8 m/min.

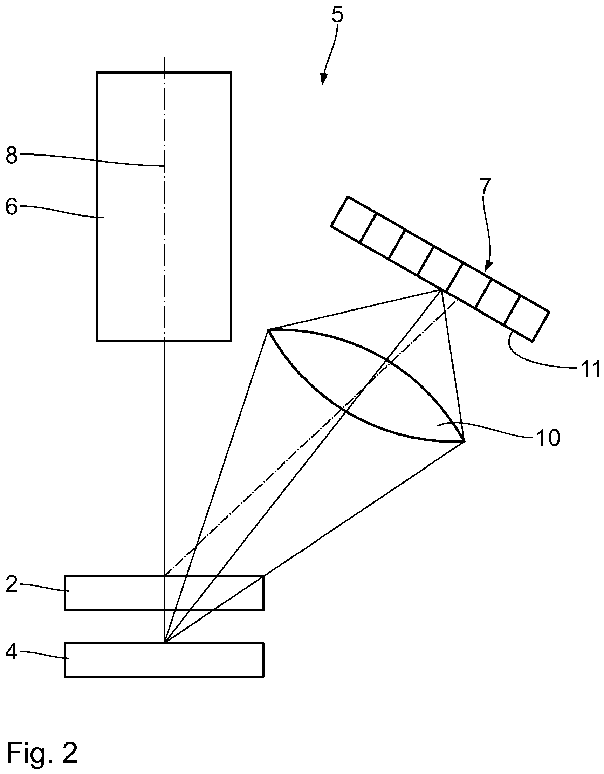

Zum Messen eines Volumens der individuellen Teigstränge 2a bis 2e dient eine Volumen-Messeinrichtung 5 mit einer Laserlichtquelle 6 und zwei CCD/PSD-(Charged Coupled Device/Positionssensitiver Detektor-) Detektoreinheiten 7. Der Aufbau der Volumen-Messeinrichtung 5 mit genau einer CCD/PSD-Detektoreinheit 7 ist in der Fig. 2 schematisch dargestellt. Die zweite der beiden Detektoreinheiten 7 ist gespiegelt um die xz-Mittelebene 8 in der Fig. 2 angeordnet.

Über eine nicht näher dargestellte Signalverbindung stehen die Detektoreinheiten 7 mit einer zentralen Steuer/Regeleinrichtung 15 der Portioniervorrichtung 1 in Verbindung.

Die Laserlichtquelle 6 erzeugt zur Volumenmessung mithilfe des Lichtschnittverfahrens einen linienhaften Lichtvorhang 9, der sich quer zur Längserstreckung der Teigstränge 2a bis 2e parallel zur yz-Ebene erstreckt. Der Lichtvorhang 9 beleuchtet also zu einem gegebenen Zeitpunkt genau eine Scheibe der Teigstränge 2a bis 2e am Ort x₀ des Lichtvorhangs 9.

Die vom Lichtvorhang 9 beleuchtete Teigstrang-Scheibe wird über ein in der Fig. 2 schematisch als Linse dargestelltes Objektiv 10 auf ein CCD/PSD-Sensorelement 11 der CCD/PSD-Detektoreinheit 7 abgebildet.

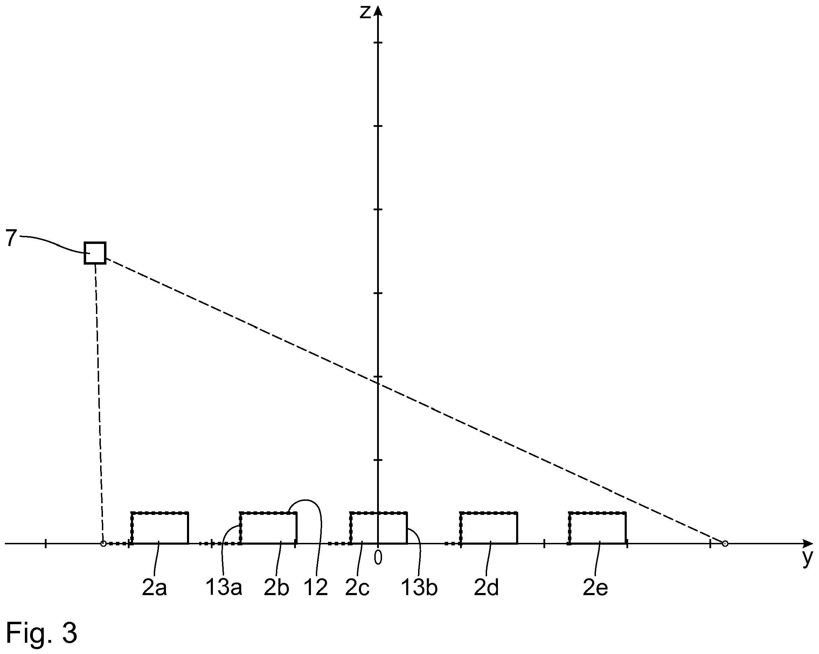

Fig. 3 verdeutlicht, welche Flächenabschnitte der Teigstränge 2a bis 2e, die in der Fig. 3 im Querschnitt dargestellt sind, von einer der beiden Detektoreinheiten 7 erfasst werden können. Jeweils eine der beiden Detektoreinheiten 7 ist in der Lage, eine Oberseite 12 und eine dieser Detektoreinheit 7 zugewandte Seitenwand 13a des jeweiligen Teigstrangs 2a bis 2e optisch zu erfassen. Die andere der beiden Detektoreinheiten 7 kann neben der Oberseite 12 zusätzlich noch die andere der beiden Seitenwände, also die Seitenwand 13b, der Teigstränge 2a bis 2e erfassen. Aus den Messdaten der beiden Detektoreinheiten 7 lässt sich also exakt das Profil der mit dem Lichtvorhang 9 am Ort x₀ abgetasteten Teigstrangscheibe der Teigstränge 2a bis 2e erfassen. Während der Förderung der Teigstränge 2a bis 2e längs der Förderrichtung x erfasst die optische Volumen-Messeinrichtung 5 daher unter Berücksichtigung der Fördergeschwindigkeit des Förderbandes 4 durch Integration das Volumen der am Ort x₀ vorbeigeförderten Teigstränge 2a bis 2e. Dieses Volumen hängt unter anderem von der Breite der Teigstränge 2 in der y-Richtung ab, also vom Abstand yₐ zwischen zwei benachbarten Längs-Schneidmessern 14, die zusammenwirkend die jeweiligen Teigstränge 2 aus einem flächigen Teigband ausschneiden. Zwischen der x-Position der Längs-Schneidmesser 14 und den in der Fig. 1 nebeneinander beabstandet verlaufend dargestellten Teigsträngen 2a bis 2e ist noch eine Teigstrang-Spreizvorrichtung angeordnet, die in der Zeichnung nicht dargestellt ist. Das Volumen der Teigstränge 2 hängt zudem noch von der Höhenprofilierung der Teigstränge 2, also von der Funktion h(x, y) ab, wobei h für die Höhe des jeweiligen Teigstrangs 2 über dem Niveau des Förderbandes 4 am Ort x, y steht.

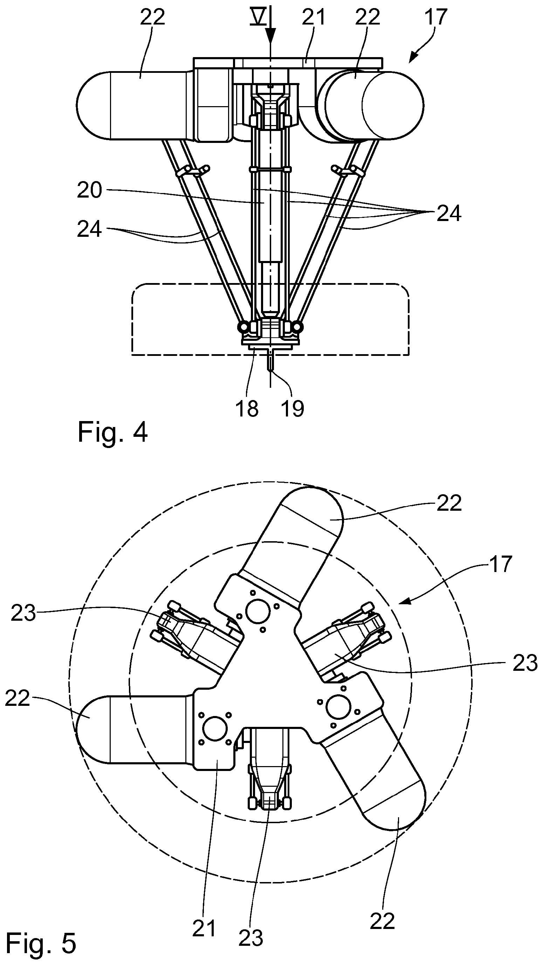

In der Förderrichtung x ist der Volumen-Messeinrichtung 5 eine Schneideinrichtung 16 zum Schneiden der Teigstränge 2a bis 2e abhängig vom Messergebnis der Volumen-Messeinrichtung 5 in die Teigportionen 3a bis 3e angeordnet. Die Schneideinrichtung 16 hat einen in drei Freiheitsgraden beweglichen Schneidkopf 17, der stärker im Detail in den Fig. 4 und 5 dargestellt ist. Der Schneidkopf 17 hat einen Halteteller 18, an dem eine Schneide 19 eines Schneidmessers festgelegt ist. Der Halteteller 18 stellt das Ende einer zentralen Kopfstange 20 des Schneidkopfes 17 dar. Die Kopfstange 20 ist über ein Kugel/Pfannengelenk an einer Rahmenplatte 21 angelenkt. Die Rahmenplatte 21 ist an einem nicht näher dargestellten Führungsgestell in der y- und innerhalb eines in der Fig. 1 angedeuteten Bereichs Δx auch in der x-Richtung angetrieben beweglich geführt angeordnet. An der Rahmenplatte 21 sind drei Servomotoren 22 des Schneidkopfes 17 festgelegt. Antriebswellen der Servomotoren 22 sind drehfest mit Pleueln 23 verbunden, deren Hebelenden über Zugstangen-Paare 24 mit dem Halteteller 18 verbunden sind. Über die drei Servomotoren 22 und den x-und y-Antrieb des nicht dargestellten Führungsgestells ist eine Bewegung der Schneide 19 in fünf unabhängigen Freiheitsgraden möglich. Bei der in den Figuren 4 und 5 dargestellten Baugruppe handelt es sich abgesehen vom Schneidmesser um einen Roboter, der in vergleichbarer Ausführung unter der Bezeichnung Flex Picker oder Delta Roboter unter anderem von den Unternehmen Kuka, Festo, Bosch und ABB bekannt ist.

Die Schneide 19 ist breiter als die Breite eines einzelnen der Teigstränge 2 in der y-Richtung.

Die Schneideinrichtung 16 steht ebenfalls mit der zentralen Steuer/Regeleinrichtung 15 in Signalverbindung. Auch ein in der Fig. 1 schematisch dargestellter Verlagerungsantrieb 25, mit dem die Längs-Schneidmesser 14 zur Teigstrang-Breitenvorgabe relativ zueinander und relativ zum Förderband 4 in der y-Richtung verlagert werden können, steht mit der zentralen Steuer/Regeleinrichtung 15 in Signalverbindung.

Eine Teigportionierung findet mit der Positioniervorrichtung 1 folgendermaßen statt: Zunächst werden in bekannter Weise die Teigstränge 2a bis 2e erzeugt. Hierbei wird ein Teigband laminiert und über das Förderband 4 an den Längs-Schneidmessern 14 vorbeigeführt, sodass nach der Spreizung durch die Teigstrang-Spreizvorrichtung die Teigstränge 2a bis 2e nach Fig. 1 resultieren. Anschließend wird mit der Volumen-Messeinrichtung 5 das Volumen der Teigstränge während der Förderung in der x-Richtung vermessen. Sodann werden die Teigstränge 2a bis 2e abhängig vom Messergebnis durch die Schneideinrichtung 16 in die Teigportionen 3a bis 3e geschnitten. Volumenabhängig ist dabei der x-Abstand zwischen zwei Schnitten, die eine Teigportion 3 definieren, was wiederum zu unterschiedlichen x-Schnittpositionen der Schneideinrichtung 16 führt, wie innerhalb des Bereiches Δx in der Fig. 1 angedeutet. Nach diesem Bereich Δx werden die Teigportionen 3 zueinander so synchronisiert, dass die Teigportionen 3a bis 3e während der nachfolgenden Förderung matrixartig und voneinander beabstandet in Spalten und Reihen vorliegen.

Beim Schneiden der Teigstränge 2a bis 2e wird die Schneideinrichtung 16 so über die verschiedenen Antriebe, also den y-Antrieb, den x-Antrieb und die drei Servomotoren 22 so geführt, dass alle Teigstränge 2a bis 2e mit diesen individuell zugeordneten Schnitten geschnitten werden. Mit einem Schnitt der Schneide 19 wird jeweils genau einer der Teigstränge 2a bis 2e geschnitten. Beim Schneidvorgang kann die Schneidvorrichtung 16 den Teigsträngen 2 innerhalb des Bereichs Δx nacheilen. Der Weg der Schneideinrichtung 16 zwischen den Teigsträngen 2a bis 2e zwischen den einzelnen Schnitten und auch die Reihenfolge der einzelnen Schnitte werden von der zentralen Steuer/Regeleinrichtung 15 wegoptimiert vorgegeben.

Nach dem Schneiden kann die Schneideinrichtung 16 die gerade abgeschnittene Teigportion 3 relativ zum verbleibenden Teigstrang 2 längs eines vorgegebenen Weges dx (vergleiche Fig. 1) längs der Förderrichtung x verlagern. Hierzu hebt die Schneide 19 unmittelbar nach dem Schneiden nur einen geringen Weg in positiver z-Richtung vom Förderband 4 ab und wird dann, noch während die Schneide 19 mit der gerade geschnittenen Teigportion 3 in Kontakt ist, in positiver x-Richtung um den vorgegebenen Weg dx verlagert. Hierbei schiebt die Schneide 19 die Teigportion 3 in Position.

Über die x-Führung der Schneideinrichtung 16 ist eine Erfassung der x-Position der Schneideinrichtung 16 möglich. Die x-Position wird über eine nicht dargestellte Signalverbindung an die zentrale Steuer/Regeleinrichtung 15 weitergegeben. Soweit die zentrale Steuer/Regeleinrichtung 15 bei einem bestimmten Teigstrang 2 eine x-Schneidposition von der Erfassungseinrichtung gemeldet bekommt, die im Δx-Bereich außerhalb eines engeren und vorgegebenen Schneid-Toleranzbereiches liegt, verändert die zentrale Steuer/Regeleinrichtung 15 über eine entsprechende Ansteuerung des Verlagerungsantriebs 25 den Abstand der beiden diesem Teigstrang 2 zugeordneten Längs-Schneidmesser 14 zueinander so, dass im weiteren Verlauf zur Herstellung der vorgegebenen Teigportionen 3 bei diesem Teigstrang 2 ein x-Schneidabstand erforderlich wird, über den eine Rückführung der Schneideinrichtung 16 in den vorgegebenen x-Toleranzbereich innerhalb des Bereichs Δx resultiert. Falls beispielsweise die Teigportionen 3 in der x-Richtung zu ausgedehnt werden, die Schnitte in der x-Richtung also einen zu großen Abstand zueinander haben, wird durch Ansteuerung des Verlagerungsantriebs 25 der zugehörige Teigstrang 2 verbreitert, sodass im Anschluss hieran die gleichen Teigportionen 3 mit in x-Richtung näher benachbarten Schnitten portioniert werden können. Das Roboter- Schneidesystem kann, wie hier beschrieben, je nach erforderlicher Leistung einzeln oder im Verbund mehrerer Schneideinrichtungen 16, die auch als sogenannte Knickarm-Roboter ausgeführt sein können, einzeln oder im Verbund oder auch als Kombination aus Robotern mit unterschiedlicher Kinematik gebildet werden. Die robotergetriebenen Schnitte können zum Abschneiden der Portionen oder auch zum Einschneiden (Kerben) der Portionen (für späteres Abbrechen z.B. nach dem Backprozess) zur Dekoration genutzt werden. Die Kombination von Abschneiden, Kerben und ggf. Dekorationsschnitten ist möglich.

Alternativ oder zusätzlich kann neben dem Volumen auch eine Dichte der Teigstränge 2a bis 2e, beispielsweise über eine Ultraschallmessung, erfolgen. Auch die Dichtemessung kann in die Teigportionierung eingehen, sodass beispielsweise nicht Teigportionen konstanten Volumens, sondern Teigportionen konstanten Gewichts erzeugt werden können. Wenn keine gleichzeitige und kontinuierliche Dichtemessung erfolgt und für die Berechnungen der Schnittlagen in Ansatz gebracht wird, kann die Dichte der zu schneidenden Teigstränge 2 als Konstante in die Steuerung eingegeben werden. Später im Verlauf der Produktion, insbesondere bei Chargen- oder Sortenwechsel, erforderliche Korrekturen der Dichte werden in diesem Fall über +/- Korrekturwerte eingegeben.

Alternativ zum vorstehend erläuterten Schneidverfahren kann die Schneideinrichtung 16 mit einem quer zum gesamten Förderband 4 verlaufenden Schneidmesser so ausgeführt sein, dass alle Teigstränge 2a bis 2e mit genau einem Schnitt des Schneidmessers geschnitten werden können. In diesem Falle werden alle Teigstränge 2 im Rahmen eines gemeinsam erfolgenden Schneidschritts mit dem genau einen Schneidmesser geschnitten. Die x-Position dieses Schnitts wird dabei anhand einer Fehlerquadratoptimierten Bestimmung des Volumens und/oder der Dichte aller Teigstränge vorgenommen, sodass ein vorgegebenes Volumen und/oder ein vorgegebenes Gewicht der Teigportionen 3 mit geringster Fehlerabweichung für alle fünf Teigstränge 2a bis 2e erreicht wird.

Bei einer weiteren Variante der Schneideinrichtung sind den einzelnen Teigstrang-Förderbahnen, längs denen die Teigstränge 2a bis 2e auf dem Förderband 4 gefördert werden, individuell zugeordnete Schneidmesser, im Falle der Portioniervorrichtung 1 nach Fig. 1 also fünf Schneidmesser zugeordnet, wobei jedes dieser individuellen Schneidmesser nur den ihm zugeordneten Teigstrang 2 in Teigportionen 3 schneidet.

Das Schneidmesser mit der Schneide 19 kann als Ultraschallmesser ausgeführt sein. Zu einem gegebenen Zeitpunkt während des Schneidens des Teigstrangs 2 kann die Schneide 19 also mit Ultraschall vibrieren. Diese Ultraschallvibration kann beispielsweise gegen Ende des Schneidvorgangs durch den Teigstrang 2 oder auch während des gesamten Schneidvorgangs aktiviert werden. Auf die Ultraschallvibration kann, abhängig vom zu portionierenden Teig, auch verzichtet werden.

Mit der Schneideinrichtung 16 sind beispielsweise 100 oder mehr Schneidvorgänge pro Minute möglich.

Durch eine entsprechende Ausgestaltung der Schneide 19 kann bei allen vorstehend beschriebenen Verfahrensvarianten beim Eintauchen der Schneide 19 in den Teigstrang 2 vor dem tatsächlichen Abtrennen der Teigportion 3 zunächst eine Verformung von dem Schnitt benachbarten Abschnitten des Teigstrangs 2 erfolgen. Es ergibt sich ein Zuziehen des Teiges vor dem Abtrennen der Teigportion 3. Dies kann zur Formung der Teigportionen 3, insbesondere zur Kissenbildung genutzt werden.

Mit der Portioniervorrichtung 1 können mehr als 20.000 Teigportionen 3 pro Stunde hergestellt werden.

Bei der Variante mit genau einem Schneidmesser kann mit der Portioniervorrichtung 1 auch ein nicht in Teigstränge unterteiltes Teigband portioniert werden, was beispielsweise zur Teigportionierung bei der Baguette- oder Brotherstellung genutzt werden kann.

Ein Teig, aus dem die Teigstränge 2 gefertigt sind, kann es sich um einen Mehrkorn-Teig oder auch um einen Ciabatta-Teig handeln.

## Patentansprüche

1. Verfahren zur Portionierung einer Mehrzahl von Teigsträngen (2) in einzelne Teigportionen (3) mit folgenden Schritten:
- Herstellung der Teigstränge (2a bis 2e),
- Messen des Volumens der Teigstränge (2a bis 2e),
- Schneiden der Teigstränge (2a bis 2e) abhängig vom Messergebnis in die Teigportionen (3a bis 3e),
- wobei das Schneiden aller Teigstränge (2a bis 2e) mit ein und derselben Schneideinrichtung (16) im Rahmen jeweils für die Teigstränge (2a bis 2e) individuell erfolgender Schneidschritte erfolgt.

2. Verfahren nach Anspruch 1, **dadurch gekennzeichnet, dass** zusätzlich vor dem Schneiden die Dichte der Teigstränge (2a bis 2e) gemessen wird.

3. Verfahren nach Anspruch 1 oder 2, **dadurch gekennzeichnet, dass** das Volumenmessen optisch erfolgt.

4. Verfahren nach einem der Ansprüche 1 bis 3, **dadurch gekennzeichnet, dass** nach dem Schneiden die Schneideinrichtung (16) die abgeschnittene Teigportion (3) relativ zum verbleibenden Teigstrang (2) längs eines vorgegebenen Weges (dx) längs der Förderrichtung (x) verlagert.

5. Verfahren nach einem der Ansprüche 1 bis 4, **gekennzeichnet durch** ein Erfassen einer Position der Schneideinrichtung (16) längs der Förderrichtung (x), wobei abhängig von der erfassten Position eine Teigstrangbreite (yₐ) des zugeförderten Teigstrangs (2) vorgegeben wird.

6. Vorrichtung (1) zur Portionierung einer Mehrzahl von Teigsträngen (2) in einzelne Teigportionen (3)
- mit einer Fördereinrichtung (4) für die hergestellten Teigstränge (2a bis 2e),
- mit einer Messeinrichtung (5) zum Messen des Volumens der Teigstränge (2a bis 2e),
- mit mindestens einer Schneideinrichtung (16) zum Schneiden der Teigstränge (2a bis 2e) abhängig vom Messergebnis in die Teigportionen (3a bis 3e),
- wobei ein Schneidmesser (19) der Schneideinrichtung (16) so ausgeführt und so angetrieben geführt ist, dass alle Teigstränge (2a bis 2e) mit diesen individuell zugeordneten Schnitten geschnitten werden können, wobei mit einem Schnitt des Schneidmessers (19) genau einer der Teigstränge (2a bis 2e) geschnitten werden kann.

7. Vorrichtung nach Anspruch 6, **gekennzeichnet durch** eine Messeinrichtung zum Messen der Dichte der Teigstränge (2).

8. Vorrichtung nach Anspruch 6 oder 7, **gekennzeichnet durch** eine optische Volumenmesseinrichtung (5).

9. Vorrichtung nach einem der Ansprüche 6 bis 8, **gekennzeichnet durch** eine Längs-Schneideinrichtung (14) zum Schneiden der Teigstränge (2) aus einem Teigband, wobei der Abstand zweier Längs-Schneidmesser (14) der Längs-Schneideinrichtung über eine Verlagerungseinrichtung (25) vorgebbar ist und wobei eine Erfassungseinrichtung für eine Position der Schneideinrichtung (16) längs der Förderrichtung (x) vorhanden ist, wobei die Erfassungseinrichtung mit der Längs-Schneideinrichtung und einer Steuer/Regeleinrichtung (15) so in Signalverbindung steht, dass abhängig von der erfassten Position der Schneideinrichtung (16) eine Teigstrangbreite (ya) des zugeförderten Teigstrangs (2) vorgegeben wird.

## Claims

1. Method for portioning a plurality of dough strands (2) into individual dough portions (3) with the following steps:
- producing the dough strands (2a to 2e),
- measuring the volume of the dough strands (2a to 2e),
- cutting the dough strands (2a to 2e) as a function of the measurement result into dough portions (3a to 3e),
wherein all of the dough strands (2a to 2e) are cut by the same cutting device (16) in cutting steps performed individually for the dough strands (2a to 2e).

2. Method according to claim 1, **characterized in that** in addition prior to cutting the density of the dough strands (2a to 2e) is measured.

3. Method according to claim 1 or 2, **characterized in that** the volume measurement is performed optically.

4. Method according to one of claims 1 to 3, **characterized in that** after cutting the cutting device (16) moves the cut off dough portion (3) relative to the remaining dough strand (2) along a predefined path (dx) along the conveying direction (x).

5. Method according to one of claims 1 to 4, **characterized by** detecting a position of the cutting device (16) along the conveying direction (x), whereby depending on the detected position a dough strand width (yₐ) of the conveyed dough strand (2) is determined.

6. Device (1) for portioning a plurality of dough strands (2) into individual dough portions (3)
- with a conveying device (4) for the produced dough strands (2a to 2e),
- with a measuring device (5) for measuring the volume of the dough strands (2a to 2e),
- with at least one cutting device (16) for cutting the dough strands (2a to 2e) as a function of the measurement result into dough portions (3a to 3e),
wherein a cutting blade (19) of the cutting device (16) is designed and driven such that all dough strands (2a to 2e) can be cut by said individually assigned cuts, whereby with one cut of the cutting blade (19) precisely one of the dough strands (2a to 2e) can be cut.

7. Device according to claim 6, **characterized by** a measuring device for measuring the density of the dough strands (2).

8. Device according to claim 6 or 7, **characterized by** an optical volume measuring device (5).

9. Device according to one of claims 6 to 8, **characterized by** a longitudinal cutting device (14) for cutting the dough strands (2) from a dough band, wherein the spacing between two longitudinal cutting blades (14) of the longitudinal cutting device can be defined by a movement drive (25), and wherein a detecting device is provided for a position of the cutting device (16) along the conveying direction (x), wherein the detecting device is in signal connection with the longitudinal cutting device and a control/regulating device (15) so that depending on the detected position of the cutting device (16) a dough strand width (ya) of the conveyed dough strand (2) is determined.

## Revendications

1. Procédé de mise en portions d'une pluralité de tronçons de pâte (2) en portions de pâte (3) individuelles, comprenant les étapes suivantes :
- la fabrication des tronçons de pâte (2a à 2e),
- la mesure du volume des tronçons de pâte (2a à 2e),
- le découpage des tronçons de pâte (2a à 2e) en fonction du résultat de la mesure en portions de pâte (3a à 3e),
- dans lequel le découpage de tous les tronçons de pâte (2a à 2e) est réalisé au moyen d'un seul et même dispositif de découpage (16) dans le cadre d'étapes de découpage réalisées individuellement dans chaque cas pour les tronçons de pâte (2a à 2e).

2. Procédé selon la revendication 1, **caractérisé en ce qu'**avant le découpage, la densité des tronçons de pâte (2a à 2e) est en outre mesurée.

3. Procédé selon la revendication 1 ou 2, **caractérisé en ce que** la mesure du volume est réalisée optiquement.

4. Procédé selon l'une quelconque des revendications 1 à 3, **caractérisé en ce qu'**après le découpage, le dispositif de découpage (16) déplace la portion de pâte (3) séparée par découpage du reste du tronçon de pâte (2) le long d'un trajet prédéfini (dx) le long du sens de transport (x).

5. Procédé selon l'une quelconque des revendications 1 à 4, **caractérisé par** une détection d'une position du dispositif de découpage (16) le long du sens de transport (x), dans lequel une largeur de tronçon de pâte (yₐ) du tronçon de pâte (2) amené est prédéfinie en fonction de la position détectée.

6. Dispositif (1) de mise en portions d'une pluralité de tronçons de pâte (2) en portions de pâte (3) individuelles
- comprenant un dispositif de transport (4) pour les tronçons de pâte (2a à 2e) produits,
- un dispositif de mesure (5) destiné à mesurer le volume des tronçons de pâte (2a à 2e),
- au moins un dispositif de découpage (16) destiné à découper les tronçons de pâte (2a à 2e) en fonction du résultat de la mesure en portions de pâte (3a à 3e),
- dans lequel une lame de coupe (19) du dispositif de découpage (16) est conçue et guidée de manière entraînée de telle sorte que tous les tronçons de pâte (2a à 2e) peuvent être découpés au moyen de ces coupes associées individuellement, dans lequel un seul des tronçons de pâte (2a à 2e) peut être découpé au moyen d'une coupe de la lame de coupe (19).

7. Dispositif selon la revendication 6, **caractérisé par** un dispositif de mesure destiné à mesurer la densité des tronçons de pâte (2).

8. Dispositif selon la revendication 6 ou 7, **caractérisé par** un dispositif de mesure de volume optique (5).

9. Dispositif selon l'une quelconque des revendications 6 à 8, **caractérisé par** un dispositif de découpage longitudinal (14) destiné à découper les tronçons de pâte (2) à partir d'une bande de pâte, dans lequel l'écart entre deux lames de coupe longitudinales (14) du dispositif de découpage longitudinal peut être prédéfini par un dispositif de déplacement (25) et dans lequel un dispositif de détection d'une position du dispositif de découpage (16) le long du sens de transport (x) est présent, dans lequel le dispositif de détection est en liaison de signalisation avec le dispositif de découpage longitudinal et un dispositif de commande/de régulation (15), de sorte qu'une largeur de tronçon de pâte (ya) du tronçon de pâte (2) amené est prédéfinie en fonction de la position détectée du dispositif de découpage (16).
